# EUROPEAN PATENT SPECIFICATION

(11) **EP 1 401 790 B1**
(45) Date of publication and mention of the grant of the patent: **02.11.2011**
(21) Application number: 00990717.1
(22) Date of filing: 12.12.2000
(51) Int. Cl.: C06F 3/00

(54) **DEVICE FOR PRESENTING INFORMATION UNITS**
GERÄT ZUM ANZEIGEN VON INFORMATIONSEINHEITEN
DISPOSITIF DE PRESENTATION D'UNITES D'INFORMATION

(30) Priority: 24.12.1999 EP 99204545
(43) Date of publication of application: 31.03.2004
(73) Proprietor: Koninklijke Philips Electronics N.V., 5621 BA Eindhoven (NL)
(72) Inventor: OOSTERHOLT, Ronaldus, H., T., NL-5656 AA Eindhoven (NL); JANSEN, Johannes, A., NL-5656 AA Eindhoven (NL)
(74) Representative: Groenendaal, Antonius W. M.
(86) International application number: PCT/EP2000/012560
(87) International publication number: WO 2001/047835

(56) References cited:
- EP-A- 0 876 034
- US-A- 5 625 781
- US-A- 5 890 172
- NEWFIELD D ET AL: "SCRATCHPAD: MECHANISMS FOR BETTER NAVIGATION IN DIRECTED WEB SEARCHING" UIST '98. 11TH ANNUAL SYMPOSIUM ON USER INTERFACE SOFTWARE AND TECHNOLOGY. PROCEEDINGS OF THE ACM SYMPOSIUM ON USER INTERFACE SOFTWARE AND TECHNOLOGY. SAN FRANCISCO, CA, NOV. 1 - 4, 1998, ACM SYMPOSIUM ON USER INTERFACE SOFTWARE AND TECHNOLOGY, NEW Y, 1998, pages 1-8, XP000970920 ISBN: 1-58113-034-1
- FRECON E ET AL: "WEBPATH-a three dimensional Web history" INFORMATION VISUALIZATION, 1998. PROCEEDINGS. IEEE SYMPOSIUM ON RESEARCH TRIANGLE, CA, USA 19-20 OCT. 1998, LOS ALMAITOS, CA, USA,IEEE COMPUT. SOC, US, 19 October 1998 (1998-10-19), pages 3-10,148, XP010313300 ISBN: 0-8186-9093-3

## Description

### FIELD OF THE INVENTION

The invention relates to a device for presenting information units, comprising history means for storing references to presentable information units into a history list, the history means comprising user operable navigation means for changing a current position in the history list, and presentation means for presenting an information unit referenced by the reference at the current position.

The invention further relates to a method of presenting information units and to a computer program product for executing the steps of said method.

### BACKGROUND OF THE INVENTION

A well known example of a device as defined in the opening paragraph is a personal computer or set-top box connectable to the internet. Such a device enables a user to enter references to web-pages, i.e. information units, causing the referenced web-pages to be retrieved and presented on a display screen. The presentation of a web-page may be requested by literally entering a unique reference, i.e. a web address, locating the web-page, or by pressing 'links' included in the content of a currently displayed page. Such devices generally include history means enabling the user to view previously presented pages. The user can select such previously presented pages by navigating a current position in a history list, notably by operating a backward and forward button, or by direct selection from a displayed history list. In response to such a selection, the related page is retrieved again, or if stored locally in a cache memory, it is retrieved from that cache memory, and presented to the user.

A disadvantage of the known devices is that the user may easily forget which pages he originally intended to select, since retrieving and viewing a selected page may take a considerable amount of time, and its contents may require the user's full attention. Furthermore, the contents of a selected page may instigate the user to start a new navigation by pressing a link included in the selected page, which further diverts the user from his original intentions. A further problem is that selection of a plurality of mutually unrelated pages is cumbersome. It involves alternately typing web addresses and viewing the retrieved web pages in accordance with said addresses.

Article "Scratchpad: mechanisms for better navigation in directed web searching", Newfield D et al, discloses a web navigation mechanism encapsulated into a scratchpad window, in addition to a web-browser main window. The scratchpad window shows a list of pending links, which are displayed as long as a web session is pending, in the form of a first-in, first-out queue. The list is created by selecting a single link in the browser window, which causes the link to be added to the end of the pending queue. This link at the end of queue is not immediately displayed. The pending links are displayed based on their ordering in the pending queue - the link at the head of the queue is removed each time a button "Next" is pressed to display a next link. To achieve a faster navigation, the to-be-visited web pages are pre-fetched and completely downloaded if there is a sufficient delay before displaying these pages.

Article "Webpath - a three dimensional web history", Frecon et al, discloses a virtual reality based application for web browsers to achieve a flexible real-time visualization of a browsing history. The visualization helps a user in searching for previously presented documents. Each web-document is represented as a cube labeled with a title of the document. When the user loads a new document, a new cube is created and presented in front of the user in the virtual reality visualization. An arrow between the new cube and a previous cube graphically indicates their relationship. A vertical dimension of the visualization portrays time of loading documents (last presented document - on top), a horizontal dimension may indicate a number of links contained in the document.

### OBJECT AND SUMMARY OF THE INVENTION

It is an object of the invention to provide an improved device and method of the type defined in the opening paragraph. To that end, the device according to the invention is described in claim 1. It is thus achieved that the user can compile a set of desired information units in advance and request their presentation by operating the history navigation means which the user is already familiar with. The user thus defines a kind of 'session' of information units he intends to request. The desired information units are treated as though they have already been presented and stored into the history list in the normal way. Because all references are stored at once in the history list, there is no burden upon the user to remember which information units he intended to request for presentation. Also, the desired information units can be accessed in a natural and intuitive way by using the history navigation means, which the user already associates with a session, namely the inspection of the information units presented earlier. The only difference is that the newly added references relate to information units which have not yet been presented or only for a very short time to indicate that they have been added to the history list. No additional user controls, such as buttons, are required. Compilation may be achieved by explicitly entering addresses, separated by, for example, commas or carriage returns, and terminated by some confirmation command. Alternatively, the user may be allowed to select multiple bookmarks or links at once and request their presentation simultaneously by a confirmation command.

A preferred embodiment of the device according to the invention is described in claim 3. Generally the references in a history list are sorted in accordance with the time of their inclusion into the list. The history list can, inter alia, be navigated through by means of a backward and forward button. The backward button is used to request presentation of information units referenced by less recently included references, while the forward button is used to navigate in the opposite direction. Normally, after a presentation which is not caused by a selection from the history list, the forward button is disabled, indicating that the current position points to the instantaneous end point of the current session. In the present embodiment, compilation of a set of desired information units would not cause the forward button to be disabled, so as to indicate that the currently presented information unit is not the end point of the current session, but that there are additional information units planned to be represented, which can be accessed by pressing the forward button iteratively. Hence, the history mechanism, conventionally concerning only a past part of a session, is extended with the concept of a future part of the session, and thus evolves into a kind of time-line mechanism. This constitutes a natural and intuitive extension of the history mechanism. Preferably, a first information unit referenced by the compiled set is displayed immediately, while the references to the other information units of the compiled set are stored into the history list, waiting to be activated by the user operating the forward button. The current position in the history list would thus point to the reference to said first information unit, the current position being succeeded by the other references of the compiled set.

An embodiment of the device according to the invention is characterized by the compilation means being adapted to impose a user supplied order on the compiled set of references, and store the references into the history list in accordance with said order. It is thus achieved that the user can specify a desired order of presentation in response to iterated operation of the forward means. For example, the user might request to firstly present information units requiring only quick inspection and then to present information units requiring more careful inspection or being likely to lead to further navigation. The user supplied order need not be strict in the sense that the user may request the presentation of additional information units before the last desired information unit of the compiled set is presented. For example, the user may follow a link from a web page of the compiled set. The user may even compile a new set of desired information units, in which case the process is performed recursively. References to desired information units which have not yet been displayed are 'pushed' further in the future part of the history list, and the references to the additional units are inserted at the intermediate positions. By iteratively operating the forward means all desired information units are eventually displayed.

An embodiment of the device according to the invention is characterized by further comprising bookmark means for storing a bookmark to the compiled set of references, and storing the references of said set into the history list in response to the user selecting said bookmark. Hence, in addition to conventional bookmarks referencing a single information unit, the present embodiment of the invention introduces composite bookmarks including a plurality of references to information units. The user may be allowed to assign a name to the composite bookmark, which can be selected just as conventional bookmarks. Upon selection of the composite bookmark, the related references are stored in the history list in accordance with the present invention. The composite bookmark may constitute a set, i.e. without an explicit order, or an ordered sequence of references. This may be a user adjustable parameter of the composite bookmark.

An embodiment of the device according to the invention is characterized by the information units being retrieved from a remote server, the compilation means being adapted to start retrieving information units referenced by the compiled set independently of an operation of the navigation means. For example, web-pages are usually stored at a remote server and need to be downloaded via a network to the presentation device. Once the user has compiled a set of desired information units, the device starts downloading the units immediately, irrespective of whether the units are actually requested for presentation by operating the history navigation means. This has the advantage that the information units are readily available when they are actually requested.

The invention is particularly suitable for web-enabled devices or internet terminals, such as a personal computer, TV, set-top box, mobile phone or personal digital assistant having an internet connection. However, the invention may equally well be applied for accessing locally stored information units.

### BRIEF DESCRIPTION OF THE DRAWINGS

These and other aspects of the invention are apparent from and will be elucidated, by way of a non-limitative example, with reference to the embodiment(s) described hereinafter. In the drawings,
Figure 1 shows a diagram of a personal computer as an embodiment of the device according to the invention,
Figure 2 shows a diagram of a computer program product according to the invention,
Figure 3 schematically shows a history list before compilation of a set according to the invention,
Figure 4 schematically shows a history list after compilation of a set according to the invention,
Figure 5 schematically shows a history list after compilation of a set according to the invention and a subsequent selection of an additional information unit.

### DESCRIPTION OF EMBODIMENTS

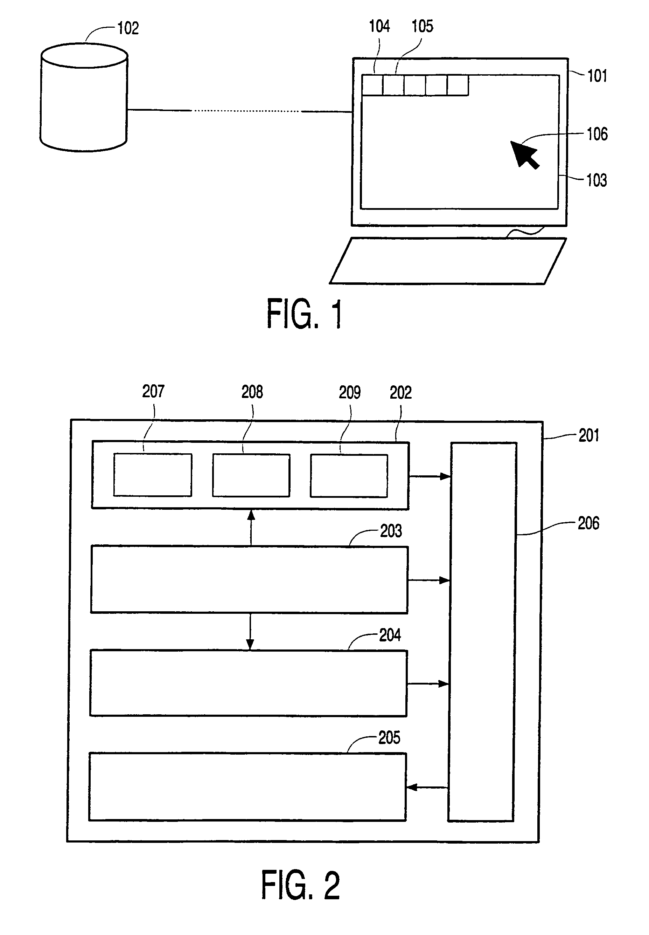

Figure 1 shows a diagram of a personal computer as an embodiment of the device according to the invention. A personal computer 101 is connected to a remote internet server 102 by means of, for example, a modem or broad-band cable connection. The personal computer 101 is capable of executing a web browser having a presentation area 103, and a toolbar comprising, inter alia, a backward button 104 and a forward button 105 which can be operated by means of a mouse-controlled cursor 106. The contents of a selected web-page is presented in the presentation area 103 and links included in the presented web-page can be followed by clicking them with the cursor 106. The web browser maintains a history list of references to web-pages which have been presented. This list can be browsed through by means of the backward button 104 and the forward button 105.
Figure 2 shows a more detailed overview of a web browser 201 executed on the personal computer 101. The web browser 201 comprises history means 202, compilation means 203, bookmark means 204, presentation means 205, and retrieval means 206. The history means 202 further comprises backward means 207, forward means 208 and direct selection means 209. The backward means 207 and the forward means 208 are coupled to and activated by the backward button 104 and the forward button 105, respectively. The web browser 201 enables a user to select web-pages by means of, inter alia, the bookmark means 204. The user may select a bookmark from a list of earlier defined bookmarks, which causes the retrieval means 206 to retrieve the web-page referenced by the selected bookmark. The retrieval means 206 may download the requested page from the remote server 102, or if the page is already available locally, retrieve it from an internal storage medium. When the retrieval is completed, the page is presented by means of the presentation means 205. A bookmark may also relate to a compiled set of multiple references as explained hereinafter.

Web-pages may also be selected by means of the history means 202, which maintain a list of references to web-pages which have been presented earlier or which are included in a user compiled set, as explained hereinafter. The references in the history list are sorted in accordance with their time of inclusion into the history list. Operation of the backward means 207 and the forward means 208 causes a current position within the history list to be shifted backward and forward, respectively. The web-page referenced by the reference at the current position is retrieved and presented by means of the retrieval means 206 and the presentation means 205 respectively. The direct selection means 209 enable the user to directly set the current position within the history list, e.g. by clicking in a displayed representation of the history list, and present the related web-page.

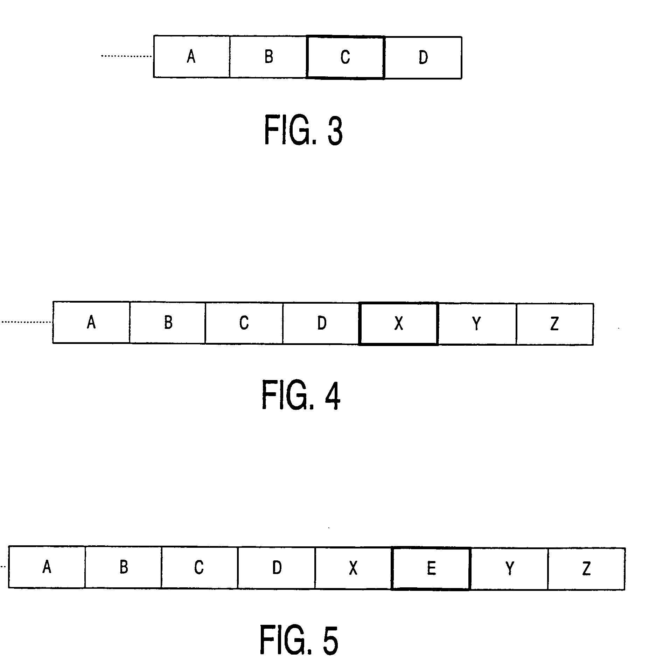

Figure 3 schematically shows a history list before compilation of a set according to the invention. The history list currently comprises references to web pages A, B, C and D. The reference to page D was included most recently. The current position is currently pointing to reference C, which may be the result of pressing the backward button once after selection of page D. Page C is currently displayed. Pressing the forward button would cause page D to be presented and the forward button to be disabled, indicating that the end of the history list is reached.

The compilation means 203 enable a user to compile a set of references to web-pages still to be represented. This may be achieved by literally entering a number of web addresses separated by some delimiter, e.g. the string 'X;Y;Z' terminated by a carriage return may cause the compilation of a set of references to pages X, Y, and Z. Alternatively, the set may be compiled by selecting a plurality of bookmarks at once. For example, if the pages X, Y and Z happened to be defined as bookmarks, selecting them simultaneously from a displayed bookmark list and confirming by a carriage return or OK-button would result in the same compiled set. Also a mixture of these and other methods may be applied. Optionally, the user may specify whether the order of the specified references should be the default order of their presentation. After compilation of the set of references, the references are appended to the history list, next to the most recently stored reference and in the order specified by the user (if any). Subsequently, the web pages referenced by the newly stored references are retrieved by means of the retrieval means 206. The first one according to the user-specified order, or alternatively, the first retrieved completely, is presented by means of the presentation means 205. Presentation of the other pages can be accomplished by iteratively operating the forward means 208. Pages which have been displayed this way, may be requested again by operating the backward means 207 or the direct selection means 209. Hence, references which have been included into the history list by the compilation means 203 are treated as normal elements of the history list.

In addition to singular bookmarks, bookmarks related to a compiled set may be defined. Selection of such a bookmark causes the references of the set to be included into the history list as described above.

Figure 4 illustrates the result of compiling a set of references to web pages X, Y and Z, starting from the situation depicted in Figure 3. The references to said pages are included into the history list in the same order, and the current position is changed to the reference to page X. Hence, in the new situation page X is displayed and pressing the backward button would cause the current position to shift backward to the reference to page D, causing page D to be displayed. Pressing the forward button in the situation of Figure 4 would cause page Y to be displayed for the first time, and pressing the forward button once again would cause page Z to be displayed for the first time. Any page may also be displayed by directly selecting its reference from a displayed history list representing the situation of Figure 4.

Figure 5 shows the result of selecting an additional page E in the situation of Figure 4. The page E may be selected by, for example, clicking a link included in the page X, by explicitly entering a new web address or selecting a bookmark. The newly included reference to page E breaks the connection between the references of the compiled set X, Y, Z, but the references to pages Y and Z are not removed from the history list at least until they have been presented once. Instead of a single additional reference E, multiple additional references may interrupt the original sequence X, Y, Z, either because of multiple selections of single pages, or because of compilation of a new set.

In summary, the invention relates to a device for presenting information units. The device comprises history means for storing references to presented information units into a history list. The history means comprise user operable navigation means for changing a current position in the history list and presenting an information unit referenced by the reference at the current position. The device further comprises compilation means for user operably compiling a set of references to desired information units, and storing the references of said set into the history list so as to present an information unit referenced by the compiled set in response to a user operating said navigation means.

Although the invention has been described with reference to particular illustrative embodiments, variants and modifications are possible within the scope of the inventive concept. Thus, for example, compilation of a set in accordance with the invention may cause the related information units to be downloaded and each of them to be presented for a short time to indicate that the units have been retrieved and can be accessed by means of the history navigation means, for example, the backward button. In this way the references of the compiled set are also included in the history list, but in an indirect way, namely by presenting the related information units for a short time.

The invention can be implemented by means of hardware comprising several distinct elements, and by means of a suitably programmed computer. Software components, such as a web-browser, may be embedded or included in the operating system of the presentation device. In the device claim enumerating several means, several of these means can be embodied by one and the same item of hardware.

The word 'comprising' does not exclude the presence of elements or steps other than those listed in a claim. A 'computer program' is to be understood to mean any software product stored on a computer-readable medium, such as a floppy-disk, downloadable via a network, such as the Internet, or marketable in any other manner.

## Claims

1. A device (101) for presenting information units, comprising
history means (202) adapted to maintain a history list for storing references to presented information units (A, B, C, D) the history means comprising
user operable navigation means (209) adapted to change a current position in the history list, and
presentation means (205) adapted to present an information unit referenced by the reference at the current position,
**characterized in that** the device further comprises compilation means (203) adapted to
- enable to user-operably compile a set of references (X, Y, Z) to desired information units, and
- store the references of said set simultaneously into the history list so as to present the information unit referenced by a respective reference of the compiled set in response to a user operating said navigation means.

2. The device of claim 1, wherein the compilation means is further arranged to include, between the references of the compiled set of references, at least one additional reference to a respective additional presentable information unit (E).

3. A device as claimed in claim 1, the navigation means comprising forward means (105, 208) adapted to change the current position in the history list to a reference stored more recently than the reference at the current position, the presentation means being adapted to present respective information units referenced by the references of the compiled set in response to the user iteratively operating said forward means.

4. A device as claimed in claim 3, the compilation means being adapted to impose a user supplied order on the references of the compiled set of references, and store the references into the history list in accordance with said order.

5. A device as claimed in any one of claims 1 to 4, further comprising bookmark means (204) adapted to store a bookmark to the compiled set of references, and to store the references of said set into the history list in response to the user selecting said bookmark.

6. A device as claimed in any one of claims 1 to 5, the information units being retrieved from a remote server (102), the compilation means being adapted to start retrieving information units referenced by the compiled set independently of an operation of the navigation means.

7. An internet access terminal including a device as claimed in any one of claims 1 to 6.

8. A method of presenting information units, comprising
- a step of maintaining a history list for storing references to presented information units (A, B, C, D),
- a step of enabling to user operably change a current position in the history list and present an information unit referenced at the current position,
**characterized in that** the method further comprises
- a step of enabling to user operably compile a set of references (X, Y, Z) to desired information units, and
- a step of storing the references of said set simultaneously into the history list so as to present the information unit referenced by a respective reference of the compiled set in response to a user changing the current position in the history list.

9. The method of claim 8, further comprising a step of including, between the references of the compiled set of references, at least one additional reference to a respective additional presentable information unit (E).

10. A method as claimed in claim 8, further comprising a forward moving step of user operably changing the current position to a reference stored more recently than the reference at the current position, and a step of presenting the information units referenced by the references of the compiled set in response to the user iteratively performing said forward moving step.

11. A method as claimed in claim 10, further comprising a step of imposing a user supplied ordering on the references of the compiled set of references, and a step of storing the references into the history list in accordance with said ordering.

12. A method as claimed in any one of claims 8 to 11, further comprising a step of storing a bookmark to the compiled set of references, and storing the references of said set into the history list in response to the user selecting said bookmark.

13. A method as claimed in any one of claims 8 to 12, the information units being retrieved from a remote server (102), the method further comprising a step of retrieving information units referenced by the compiled set independently of an operation of a navigation means (209).

14. A computer program including code means adapted to implement, when executed on a computing device, the steps of the method as claimed in any one of claims 8 to 13.

## Patentansprüche

1. Anordnung (101) zum Anzeigen von Informationseinheiten, die Folgendes umfasst:
Verlaufmittel (202), vorgesehen zum Einhalten einer Verlaufliste zur Speicherung von Bezugswerten angezeigter Informationseinheiten (A, B, C, D), wobei die Verlaufmittel Folgendes umfassen
vom Benutzer steuerbare Navigationsmittel (109), vorgesehen zum Ändern einer aktuellen Position in der Verlaufliste, und
Anzeigemittel (205), vorgesehen zum Anzeigen einer durch den Bezugswert an der aktuellen Position angegebenen Informationseinheit,
**dadurch gekennzeichnet, dass** die Anordnung weiterhin Kompilationsmittel (203) aufweist, die vorgesehen sind zum
- Ermöglichen einer vom Benutzer steuerbaren Kompilation eines Satzes von Bezugswerten (X, Y, Z) zu gewünschten Einheiten, und
- simultanen Speichern der Bezugswerte des genannten Satzes in der Verlaufliste zum Anzeigen der durch einen betreffenden Bezugswert des kompilierten Satzes angegebenen Informationseinheit, und zwar in Reaktion auf einen die genannten Navigationsmittel steuernden Benutzer.

2. Anordnung nach Anspruch 1, wobei das Kompilationsmittel weiterhin dazu vorgesehen ist, zwischen die Bezugswerte des kompilierten Satzes von Bezugswerten wenigstens einen zusätzlichen Bezugswert einer betreffenden zusätzlichen anzeigbaren Informationseinheit (E) einzuschließen.

3. Anordnung nach Anspruch 1, wobei die Navigationsmittel Weiterleitmittel (105, 208) aufweist, vorgesehen zum Ändern der aktuellen Position in der Verlaufliste in einen gegenüber dem Bezugswert an der aktuellen Position jüngeren gespeicherten Bezugswert, wobei die Anzeigemittel dazu vorgesehen sind, die betreffenden durch die Bezugswerte des kompilierten Satzes angegebenen Informationseinheiten anzuzeigen, und zwar in Reaktion auf den Benutzer, der wiederholt die genannten Weiterleitmittel steuert.

4. Anordnung nach Anspruch 3, wobei die Kompilationsmittel dazu vorgesehen sind, eine vom Benutzer gelieferte Reihenfolge den Bezugswerten des kompilierten Satzes von Bezugswerten aufzuerlegen und die Bezugswerte entsprechend der genannten Reihenfolge in der Verlaufliste zu speichern.

5. Anordnung nach einem der Ansprüche 1 bis 4, die weiterhin Markierungsmittel (204) aufweist, vorgesehen zum Speichern einer Markierung betreffs des kompilierten Satzes von Bezugswerten und zum Speichern der Bezugswerte des genannten Satzes in die Verlaufliste, und zwar in Reaktion auf den Benutzer, der die genannte Markierung selektiert.

6. Anordnung nach einem der Ansprüche 1 bis 5, wobei die Informationseinheiten aus einem Fernserver (102) abgerufen werden, wobei die Kompilationsmittel dazu vorgesehen sind, das Abrufen durch den kompilierten Satz angegebener Informationseinheiten zu starten, und zwar unabhängig von einer Steuerung der Navigationsmittel.

7. Internetzugriffsterminal mit einer Anordnung nach einem der Ansprüche 1 bis 6.

8. Verfahren zum Anzeigen von Informationseinheiten, wobei das Verfahren die nachfolgenden Verfahrensschritte umfasst:
- das Einhalten einer Verlaufliste zum Speichern von Bezugswerten angezeigter Informationseinheiten (A, B, C, D),
- das Ermöglichen einer vom Benutzer steuerbaren Änderung einer aktuellen Position in der Verlaufliste und das Anzeigen einer an der aktuellen Position angegebenen Informationseinheit,
**dadurch gekennzeichnet, dass** das Verfahren weiterhin Folgendes umfasst:
- das Ermöglichen, dass ein Benutzer einen Satz von Bezugswerten (X, Y, Z) zu gewünschten Informationseinheiten kompiliert, und
- das simultane Speichern der Bezugswerte des genannten Satzes von Bezugwertes in die Verlaufliste zum Anzeigen der durch einen betreffenden Bezugswert des kompilierten Satzes angegebenen Informationseinheit, und zwar in Reaktion darauf, dass ein Benutzer die aktuelle Position in der Verlaufliste ändert.

9. Verfahren nach Anspruch 8, das weiterhin den Verfahrensschritt umfasst, zwischen die Bezugswerte des kompilierten Satzes von Bezugswerten wenigstens einen zusätzlichen Bezugswert einer betreffenden zusätzlichen anzeigbaren Informationseinheit (E) einzuschließen.

10. Verfahren nach Anspruch 8, das weiterhin einen Weiterleitschritt umfasst, wobei ein Benutzer durchführbar die aktuelle Position in der Verlaufliste in einen gegenüber dem Bezugswert an der aktuellen Position jüngeren gespeicherten Bezugswert ändert, und einen Verfahrensschritt der Anzeige der betreffenden durch die Bezugswerte des kompilierten Satzes angegebenen Informationseinheiten, und zwar in Reaktion auf den Benutzer, der wiederholt die genannten Weiterleitmittel steuert.

11. Verfahren nach Anspruch 10, das weiterhin einen Verfahrensschritt umfasst, wobei eine vom Benutzer gelieferte Reihenfolge den Bezugswerten des kompilierten Satzes von Bezugswerten auferlegt wird einen Schritt, in dem die Bezugswerte entsprechend der genannten Reihenfolge in der Verlaufliste gespeichert werden.

12. Verfahren nach einem der Ansprüche 8 bis 11, das weiterhin einen Schritt umfasst, in dem eine Markierung betreffs des kompilierten Satzes von Bezugswerten gespeichert wird und die Bezugswerte des genannten Satzes in die Verlaufliste gespeichert wird, und zwar in Reaktion auf den Benutzer, der die genannte Markierung selektiert.

13. Verfahren nach einem der Ansprüche 8 bis 12, wobei die Informationseinheiten aus einem Fernserver (102) abgerufen werden, wobei das Verfahren weiterhin einen Verfahrensschritt umfasst, in dem das Abrufen durch den kompilierten Satz angegebener Informationseinheiten erfolgt, und zwar unabhängig von einer Steuerung eines Navigationsmittels (209).

14. Computerprogramm mit Codemitteln zum Implementieren, wenn in einer Computeranordnung durchgeführt, der Schritte des Verfahrens nach einem der Ansprüche 8 bis 13.

## Revendications

1. Dispositif (101) de présentation d'unités d'information, comprenant :
des moyens historiques (202) qui sont adaptés de manière à maintenir une liste historique pour stocker des références à des unités d'information présentées (A, B, C, D), les moyens historiques comprenant :
des moyens de navigation opérationnels de l'utilisateur (209) qui sont adaptés de manière à changer une position actuelle dans la liste historique, et
des moyens de présentation (205) qui sont adaptés de manière à présenter une unité d'information qui est référencée par la référence à l'endroit de la position actuelle,
**caractérisé en ce que** le dispositif comprend en outre des moyens de compilation (203) qui sont adaptés de manière à :
- permettre de compiler de manière opérationnelle par l'utilisateur un ensemble de références (X, Y, Z) à des unités d'information souhaitées, et
- stocker les références dudit ensemble simultanément dans la liste historique de manière à présenter l'unité d'information qui est référencée par une référence respective de l'ensemble compilé en réponse à un utilisateur exploitant lesdits moyens de navigation.

2. Dispositif selon la revendication 1, dans lequel les moyens de compilation sont en outre agencés de manière à inclure, entre les références de l'ensemble compilé de références, au moins une référence additionnelle à une unité d'information présentable additionnelle respective (E).

3. Dispositif selon la revendication 1, les moyens de navigation comprenant des moyens avant (105 ; 208) qui sont adaptés de manière à changer la position actuelle dans la liste historique en une référence qui est stockée plus récemment que la référence à l'endroit de la position actuelle, les moyens de présentation étant adaptés de manière à présenter des unités d'information respectives qui sont référencées par les références de l'ensemble compilé en réponse à l'utilisateur qui exploite itérativement lesdits moyens avant.

4. Dispositif selon la revendication 3, les moyens de compilation étant adaptés de manière à imposer un ordre donné par l'utilisateur aux références de l'ensemble compilé de références et à stocker les références dans la liste historique selon ledit ordre.

5. Dispositif selon l'une quelconque des revendications précédentes 1 à 4, comprenant en outre des moyens de signet (204) qui sont adaptés de manière à stocker un signet à l'ensemble compilé de références et à stocker les références dudit ensemble dans la liste historique en réponse à l'utilisateur qui sélectionne ledit signet.

6. Dispositif selon l'une quelconque des revendications précédentes 1 à 5, les unités d'information étant récupérées d'un serveur distant (102), les moyens de compilation étant adaptés de manière à commencer la récupération d'unités d'information qui sont référencées par l'ensemble compilé indépendamment d'un fonctionnement des moyens de navigation.

7. Terminal d'accès Internet comprenant un dispositif selon l'une quelconque des revendications précédentes 1 à 6.

8. Procédé de présentation d'unités d'information, comprenant :
- une étape consistant à maintenir une liste historique pour stocker des références à des unités d'information présentées (A, B, C, D),
- une étape consistant à permettre à l'utilisateur de changer de manière opérationnelle une position actuelle dans la liste historique et à présenter une unité d'information qui est référencée à l'endroit de la position actuelle,
**caractérisé en ce que** le procédé comprend en outre :
- une étape consistant à permettre à l'utilisateur de compiler de manière opérationnelle un ensemble de références (X, Y, Z) à des unités d'information souhaitées, et
- une étape consistant à stocker les références dudit ensemble simultanément dans la liste historique de manière à présenter l'unité d'information qui est référencée par une référence respective de l'ensemble compilé en réponse à un utilisateur qui change la position actuelle dans la liste historique.

9. Procédé selon la revendication 8, comprenant en outre une étape consistant à inclure, entre les références de l'ensemble compilé de références, au moins une référence additionnelle à une unité d'information présentable additionnelle respective (E).

10. Procédé selon la revendication 8, comprenant en outre une étape de mouvement en avant de l'utilisateur qui change de manière opérationnelle la position actuelle en une référence qui est stockée plus récemment que la référence à l'endroit de la position actuelle et une étape consistant à présenter les unités d'information qui sont référencées par les références de l'ensemble compilé en réponse à l'utilisateur qui exploite itérativement ladite étape de mouvement en avant.

11. Procédé selon la revendication 10, comprenant en outre une étape consistant à imposer un ordre donné par l'utilisateur aux références de l'ensemble compilé de références et une étape consistant à stocker les références dans la liste historique selon ledit ordre.

12. Procédé selon l'une quelconque des revendications précédentes 8 à 11, comprenant en outre une étape consistant à stocker un signet à l'ensemble compilé de références et à stocker les références dudit ensemble dans la liste historique en réponse à l'utilisateur qui sélectionne ledit signet.

13. Procédé selon l'une quelconque des revendications précédentes 8 à 12, les unités d'information étant récupérées d'un serveur distant (102), le procédé comprenant en outre une étape consistant à récupérer des unités d'information qui sont référencées par l'ensemble compilé indépendamment d'un fonctionnement des moyens de navigation (209).

14. Programme informatique comprenant des moyens de code qui sont adaptés de manière à mettre en oeuvre, lorsqu'ils sont exécutés sur un dispositif informatique, les étapes du procédé selon l'une quelconque des revendications précédentes 8 à 13.
